(19) Europäisches Patentamt
European Patent Office
Office européen des brevets

(11) **EP 3 150 958 A1**

(12) **EUROPEAN PATENT APPLICATION**

(43) Date of publication:
**05.04.2017 Bulletin 2017/14**

(51) Int Cl.:
*G01B 11/06* (2006.01)     *G01B 9/02* (2006.01)

(21) Application number: **15188225.5**

(22) Date of filing: **02.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Nederlandse Organisatie voor toegepast-natuurwetenschappelijk onderzoek TNO 2595 DA 's-Gravenhage (NL)**

(72) Inventors:
• **Cheng, Lun Kai**
  **2595 DA's-Gravenhage (NL)**
• **van den Dool, Teunis Cornelis**
  **2595 DA's-Gravenhage (NL)**
• **de Jong, Willem**
  **2595 DA's-Gravenhage (NL)**

(74) Representative: **V.O.**
  **P.O. Box 87930**
  **2508 DH Den Haag (NL)**

(54) **OPTICAL THICKNESS MEASURING DEVICE AND METHOD**

(57)     The thickness of an at least partially transparent layer is measured using wavelength band limited light, with a coherence length that is less than twice the thickness of the layer. Reflections from layer are fed to a 2-n coupler (n>2) via optical transmission paths of different optical length. The 2-n coupler mix light from the path into n combinations of light from the paths, each combination with a different mutual phase offset between the light from the two paths. This leads to coherent interference between reflections from the front and back of the layer when the difference between the optical lengths of the optical transmission paths compensates for the path between reflection from the front and the back. A processing circuit computes information indicative of a phase difference between the reflections from n intensities of the 2-n coupler. The use of n>2 signals makes it possible to eliminate the influence of reflection amplitude variations on the computed phase difference.

EP 3 150 958 A1

## Description

Field of the invention

The invention relates to optical monitoring the thickness of an at least partially transparent moving layer.

Background

It is known to monitor the thickness of a transparent layer by means of interference of light reflections from the front and back surface of the layer. When the light reflections interfere, the intensity of combined light reflections from the front and back surface is $I1^2+I2^2+I1*I2*cos(phi)$, wherein I1 and I2 are the amplitude of the reflections from the front and back surface respectively and phi is their phase difference, which is proportional to the thickness of the layer.

For a moving layer, thickness variations will result in variation of the phase difference and hence in variation of the interference intensity that can be measured. Unfortunately, the amplitudes I1 and I2 can also vary due to variation of distance to the layer, of tilt of the layer and of the reflection amplitudes as a function of position along the layer, even if the phase difference does not vary. This makes a single combined light intensity $I1^2+I2^2+I1*I2*cos(phi)$ an unreliable or even unusable measure of thickness.

In principle, this problem could be eliminated by measuring I1 and I2 from reception of separate reflections from the front and back surface, and simultaneous measurement of the intensity $I1^2+I2^2+I1*I2*cos(phi)$ of a combination of the reflections. However, with such a measurement it is difficult to obtain localized measurements e.g. in particular for a thin film layer, since separate reception requires use of separate reception points. Alternatives like successive measurement of I1, I2 and $I1^2+I2^2+I1*I2*cos(phi)$ using different light emission points require careful alignment and/or careful synchronization of different measurements with transport of the layer.

Summary

Among others it is an object to provide for a simplified way of localized thickness monitoring.

An optical thickness measuring device is provided, the device comprising

- a wavelength band limited lighting unit, configured to produce light having a limited coherence length;
- a device output for transmitting light from the lighting unit to an at least partly transparent layer;
- a device input for receiving back reflections of the light from the layer;
- a splitter comprising two splitter outputs and a splitter input coupled to the device input;
- a 2-n coupler, with n at least three, comprising n coupler outputs and two coupler inputs, configured to mix light from the two coupler inputs into n combinations of light from the two coupler inputs, each combination with a different relative phase offset between the light from the two coupler inputs;
- first and second optical transmission paths of different optical length, between respective ones of the splitter outputs and the coupler inputs, a difference between the optical lengths exceeding the coherence length;
- n detectors coupled to respective ones of the coupler outputs;
- a processing circuit coupled to the n detectors, configured to compute information indicative of a phase difference between the reflections from n intensities of the plurality of combinations of light detected by the n detectors.

Because interference occurs only for coherent light, only reflected light from the front and back surface of the layer that has travelled through the longest and shortest light transmission paths in the device respectively contribute to interference, when the optical path length difference in the device differs by less than the coherence length from the optical path length back and forth through the layer.

In this device, the limited coherence length makes the reflected light from the front and back surface of the layer that travels along a same path incoherent. This is used to separate the relevant paths of the reflected light in the measuring system, after the input where reflections from both the front and back surface are received. By mixing light from the different paths with different phase offsets a plurality of simultaneous measurements of interference of light from the front and back surface of the layer is made possible. In turn, such a plurality of measurements makes it possible to eliminate the dependence on effects other than phase variation, such as effects due to reflection amplitude variation.

In an embodiment, the device input and the device output form a single input-output, the device comprising an optical fiber coupled between the lighting unit and the splitter at a first end and to the input output at a second end. In this way the thickness monitoring can be limited to a narrow region of the layer. Preferably, an anti-reflection coating is provided on the second end of the optical fiber. This reduces spurious contributions from reflection from the end of the fiber. Also when a separate input is used, an anti-reflection coating may be used to reduce reflection due to other optical interfaces. Preferably, the optical fiber is a single mode optical fiber. This serves to preserve accurate phase relations between the reflections after coupling into the fiber via the device input.

In an embodiment, the lighting unit comprises an broadband light source and an optical band pass filter coupled between the light source and the device output. This makes it possible to set the coherence length in order to provide for a sufficient thickness measuring range. For example, the lighting unit may comprise an optical fiber comprising a fiber Bragg grating, the fiber Bragg grating forming the optical band pass filter.

In a further embodiment means such as a Piezo stack or a motor are attached to the optical fiber for controllably stretching the fiber Bragg grating. This enables filter tuning, e.g. of the center wavelength without affecting the bandwidth of the filter. In a further embodiment, the processing circuit is configured to cause said means to vary a degree of stretching of the coupled to the n detectors and to compute said information repeatedly each time with a different degree of stretching. In this way an unambiguous thickness measurement may be made possible over a wide range.

Various configurations may be used to realize the first and second optical transmission paths. For example, the first and second optical transmission paths may extend from the splitter outputs to the two coupler inputs. As another example the first and second optical transmission paths may be defined by travel back and forth over optical paths.

The device can be advantageously used in a system with a transport system for transporting the layer along the device in a direction substantially perpendicular to the beam delivered by the device output. Because a plurality of simultaneous measurements can be performed, distortions due to movement can be reduced.

In an embodiment the optical thickness measuring system comprises a plurality of pairs of first and second optical transmission paths with mutually different differences between the optical lengths of their first and second optical transmission paths, the differences forming a series of differences of increasing size wherein the sizes of successive differences in the series differ by the coherence distance or less. The makes it possible to measure thickness values over a wider range. Respective ones of these pairs may be part of respective different optical thickness measuring devices coupled to the same device input and output. Such different optical thickness measuring devices may share components like the lighting unit and the processing circuit. In one embodiment, each pair of first and second optical transmission paths is coupled to inputs of a respective 2-n coupler. In another embodiment, wherein the 2-n coupler is an m-n coupler (m>2), the first and second optical transmission paths of each of the pairs may be coupled to inputs of the same m-n coupler.

Brief description of the drawing

These and other objects and advantageous aspects will become apparent from a description of exemplary embodiments with reference to the following figures.

Figure 1 shows a thickness measuring configuration
Figure 2 shows a first embodiment of a thickness measuring device
Figure 3 shows a second embodiment of a thickness measuring device
Figure 4 shows an embodiment with a plurality of measuring units

Detailed description of exemplary embodiments

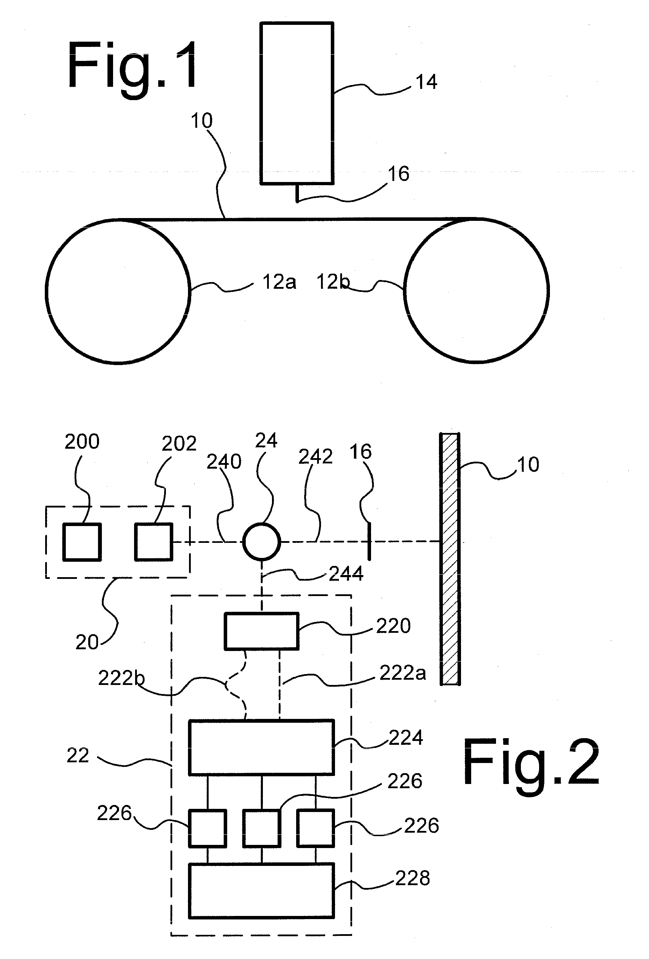

Figure 1 shows a configuration for measuring the thickness of a film 10, wherein a transport mechanism 12a,b is used to transport film 10 along an optical thickness measuring device 14 with a single input-output 16. By way of example the transport mechanism comprises a first and second roll 12a,b for transporting film 10 from first roll 12a to second roll 1b, thickness measuring device 14 measuring the thickness of film 10 between rolls 12a, b.

Figure 2 schematically shows an embodiment of the optical thickness measuring device. The device comprises a lighting unit 20, a measuring unit 22, and a coupler 24 coupled between the lighting unit 20, measuring unit 22 and an input-output 16 of the optical thickness measuring device, so as to feed light from lighting unit 20 to input-output 16 but not to measuring unit 22, and to feed return light from input-output 16 to measuring unit 22. Input-output 16 is directed at film 10. Coupler 24 may be an optical circulator.

Lighting unit 20 comprises a broadband light source 200 such as a LED and a bandpass filter 202 between broadband light source 200 and coupler 26. Light source 200 is broadband in the sense that its spectral bandwidth is larger than that of bandpass filter 202 and contains the pass band of bandpass filter 202. Measuring unit 22 comprises a beam splitter 220, first and second parallel optical light transmission paths 222a,b, a 2-n beam combiner 224 (n>2), a plurality of n detectors 226 and a processing circuit 228. Beam splitter 220 has an input coupled to coupler 24. Optical light transmission paths 222a,b run in parallel, from respective outputs of beam splitter 220 to respective inputs of 2-n beam combiner 224. The optical lengths of optical light transmission paths 222a,b between beam splitter 220 and 2-n beam combiner 224 differ from each other. Detectors 226 are coupled to respective outputs of 2-n beam combiner 224. Processing circuit 228 is coupled to outputs of detectors 226. Processing circuit 228 may comprise a programmable computer programmed with a program to perform the described functions of processing circuit 228.

As illustrated, light passes to and from film 10 through the same input-output. Alternatively, separate input-outputs may be used. In that case, coupler 24 is not needed. However, use of the same input-makes it easier to realize measurements on narrowly defined locations on film 10. In an embodiment, an optical fiber may be used to pass light from input-output 16,or a separate input to measuring unit 22. At least when an optical fiber is used to pass light to and from input-output 16, preferably an anti-reflective coating is provided on the output of this optical fiber. The anti-reflective coating reduces spurious contributions of reflection from the output. Anti-reflective coatings are known per se, e.g. as a layer with a thickness that ensures destructive interference of light reflected from the front and back of the coating. Preferably a single mode fiber is used. i.e. an optical fiber that allows propagation at the wavelength of lighting unit 20 only in a single propagation mode. This provides for a more accurate dependence of the phase on the thickness of film 10. Optical fibers may also be used to feed light from lighting unit 20 to input-output 16 and to feed light from coupler 24 to measuring unit 22. At least the latter is preferably also a single mode fiber.

In an embodiment optical light transmission paths 222a,b may be realized entirely within optical fibers running from splitter 220 to 2-n beam combiner 224. Beam combiner 224 may comprise continuations of these fibers, which may run on to detectors 226, with n-2 additional fibers in and optionally from beam combiner 224. The fibers may be integrated on a substrate e.g. as optical waveguides. Preferably single mode fibers are used. However, alternatively any other light transmission paths may be used, e.g. through the air. Use of fibers or optical waveguides on a substrate may provide for better mechanical stability. Although 2-n beam combiner 224 has been described with two inputs, both of which are used, it should be appreciated that in fact 2-n beam combiner 224 may be an m-n combiner, with m>2, of which only two inputs are used.

Input-output 16 may simply be an aperture. In a further embodiment Input-output 16 may comprise a lens (not shown). A collimator may be used to provide a collimated beam towards film 10 and to focus reflected light e.g. at the input of an optical fiber that runs towards measuring unit 22, optionally via coupler 24. In this embodiment, an anti-reflection coating on the lens may be used to reduce spurious contributions of reflection from the lens.

In operation, the optical thickness measuring device transmits light to film 10 and receives back reflected light from film 10. Dashed lines 240, 242, 244 illustrate the beam paths to and from coupler 24. Lighting unit 20 transmits light to film 10 via coupler 24 and input-output 16 via beam paths 240, 242. Input-output 16 passes the reflected light to beam splitter 220 via beam paths 242, 244 and coupler 24. Beam splitter 220 splits the light and passes split parts of the reflected light to 2-n beam combiner 224 in parallel via optical light transmission paths 222a,b. 2-n beam combiner 224 combines the light from optical light transmission paths 222a,b in at least three different phase combinations. Detectors 226 detect the intensities of the different phase combinations. Processing circuit 228 uses the output signals of detectors 226 to compute a phase difference between the light from optical light transmission paths 222a,b.

At each output of 2-n beam combiner 224 the light from optical light transmission paths 222a,b is combined with a phase offset particular to that output. As a result the intensity S(i) at such an output is represented by

$$S(i) = A0 * (1 + V*\cos{(Phi + Theta(i))})$$

Herein Theta(i) is the phase offset particular to the output labeled "i" (i=0, 1,...), wherein the values of Theta(i) for different i are different. Phi is the phase offset between the light from optical light transmission paths 222a,b at the inputs of 2-n beam combiner 224. A0 is the amplitude of the interference signal which is proportional to the optical power of the light from optical light transmission paths 222a,b, e.g. the sum of the squares of the amplitudes I1, I2 of the light from the individual optical light transmission paths 222a,b. V is a factor that represents the visibility of the interference signal which includes the ratio between the optical power of I1 and I2. In an embodiment 2-n beam combiner 224 may be configured so that V is theoretically the same for all outputs "i" for a perfect beam combiner 224. In any embodiment, the ratio of the values of V for different outputs is fixed, and the V values for different outputs equal predetermined factors for the individual outputs times a common factor dependent on the properties of the reflected light. The predetermined factors may be determined by calibration. Similarly, the factor A0 for different outputs may involve predetermined (e.g. calibrated) factors for different outputs. Thus, the intensity S(i) may be written S(i)=a(i)*A0* (1 + v(i)*V*cos (Phi+Theta(i))), wherein a(i), c(i) and Theta(i) for the respective outputs "i" have predetermined values, which may be determined by calibration. Only A0, V and Phi depend on the properties of the received light. For an ideal 2-n combiner, a(i) and c(i) may be independent of i and for an 2-3 combiner Theta(i) may have the values 0, and +-2*PI/3 for the different outputs "i".

As will be explained, the optical thickness measuring device is configured to ensure that I1, I2 and hence A0 in this expression are determined by the amplitudes of light that has been reflected from the front and back of film 10 and that Phi is determined by their phase difference.

To ensure this, use is made of light with a limited coherence length, which ensures that light that has travelled via different paths only contributes to the term A0*V*cos (Phi+Theta(i)) if the difference between the lengths of these paths is smaller than the coherence length.

For light reflected by film 10, the length of the paths includes the optical path length to the front surface of film 10 and back, and in the case of reflections from the back surface also the path back and forth between the front and back surface of film 10. For the parts of the light that travel via first and second optical light transmission paths 222a,b, the optical path length includes the length of the first and second optical light transmission path 222a,b respectively.

As a result the phase difference Phi of the light reflected light from the front and back of film 10 that contributes to the measured intensity is determined by the thickness of film 10 and the difference between the lengths of optical light transmission paths 222a,b and the wavelength lambda of the light: Phi is proportional to

$$(2*T-DL)/lambda$$

Herein T is the optical thickness of film 10 (the physical thickness times the index of refraction of film 10) and DL is the optical path length difference between first and second optical light transmission paths 222a,b.

In the optical thickness measuring device the internal optical path length difference DL between the length of the first and second optical light transmission path 222a,b is selected dependent on the nominal thickness of film 10, so that the internal optical path length difference does not differ more than by the coherence length from the film optical length difference due to travel back and forth between the front and back surface of film 10. Thus light that has been reflected from the front surface of film 10 and traveled through the longest of optical light transmission path 222a, b contributes to the term A0*V*cos (Phi+Theta(i)) together with light that has been reflected from the back surface of film 10 and traveled through the shortest of optical light transmission path 222a, b.

The coherence length is made so large that such contributions to the term A0*V*cos (Phi+Theta(i)) are ensured for a range of expected thicknesses of film 10. Thus if Tmin and Tmax are the expected minimum and maximum film optical thickness difference and DL is the internal optical path length difference in the optical thickness measuring device, DL-Tmin<d and Tmax-DL<d, where "d" is the coherence length.

At the same time, the coherence length "d" is made so small that light that has been reflected from the front surface of film 10 and has traveled through the longest of optical light transmission path 222a, b does not contribute to the term A0*V*cos (Phi+Theta(i)) together with light that has been reflected from the same front surface of film 10 and has traveled through the shortest of optical light transmission path 222a, b. That is, the coherence length "d" is set shorter than the minimal film optical length difference Tmin: Tmin>d, i.e. twice the expected minimum optical path length through film 10.

More generally, any kind of transparent layer may be used instead of film, either on an object or free carrying. The nominal physical thickness of the layer may have a value in a range of 0.1 to 1 mm or even more than 10mm for example, with a 10% difference between the minimum and maximum expected difference Tmin, Tmax. In this example, when the thickness of the film is 0.1 mm the coherence length should be less than 0.095mm and more than 0.01mm both times the refractive index of film 10. When the thickness of the film is 1mm the coherence length should be less than 0.95 mm and more than 0.1 mm if the thickness of the film is 1 mm times the refractive index of film 10.

The coherence length of light is an intrinsic property of the light, which can be controlled by means of filtering. As used herein, an optical path length difference is said to be smaller than the coherence length when there exists a measurable interference effect between the versions of the light that have travelled over paths that differ by the optical path length difference and larger than the coherence length when there exists no measurable interference effect. In other words, as used herein, a coherence range is defined of optical path length differences for which there exists a measurable interference effect between the versions of the light that have travelled over paths that differ by an optical path length difference in the coherence range. An optical path length difference is said to be smaller than the coherence length when it is in this coherence range.

It will be appreciated that the size of the interference effect may decrease with increasing path length difference even when the path length difference remains smaller than the coherence length according to this definition. It should be noted that alternatively a second definition of the coherence length could be the path length at which the interference amplitude is half of the interference amplitude at path length differences of less than a wavelength. This second definition would lead to a lower limit on path length differences that are smaller than the coherence length as used herein. In further embodiments, the present disclosure applies with this second definition, by replacing disclosure that the path length difference is smaller than the coherence length by the requirement that the path length difference is about or less than the second definition of the coherence length, and replacing disclosure that the path length difference is larger than the coherence length by the requirement that the path length difference is outside the coherence range, i.e. so large that there exists no a measurable interference effect between the versions of the light that have travelled over paths that differ by the path length difference. The embodiments according to these replacements provide for more accurate measurements.

The coherence length "d" is related to the bandwidth B of bandpass filter 202 and is approximately equal to Lambda$^2$/B, wherein Lambda is the central wavelength of bandpass filter 202 and B is its bandwidth in the wavelength domain. If Lambda equals one micrometer, a coherence length of 0.1 mm corresponds to a bandwidth of approximately 0.01 micrometer.

By way of example bandpass filter 202 may be realized by means of an optical fiber containing a fiber Bragg grating, in which case the bandwidth can be set by selecting the number of periods in the grating and/or the modulation depth of the index of refraction in the grating. Optical fibers containing a fiber Bragg grating with the required bandwidth suitable for use to measure optical film thicknesses in a range of 0.1 to 1 mm are commercially available.

2-n beam combiners that combine from optical light transmission paths 222a,b with different mutual phase offset particular at different outputs are known per se, in the form of three parallel adjacent optical fibers with traveling wave transfer between the fibers. In this embodiment, the inputs of two of the fibers serve as inputs of the 2-3 beam combiner, and outputs of the fibers serve as outputs of the 2-3 beam combiner. However, any 2-n beam combiner 224 that combines light from two beams with different phase offsets can be used, e.g. by using two 1-n beam splitting arrangements and n 2-1 beam combiners coupled to pairs of outputs of the 1-n beam splitting arrangements, with different phase delay elements in front of one of the inputs of different 2-1 beam combiners. As noted, an 2-n beam combiner results in output intensities $S(i)$ at different outputs indexed by "i" that can be expressed as

$$S(i)= A0*(1+V*\cos(Phi+Theta(i)))$$

with additional factors $a(i)$ and $c(i)$ if necessary, as described in the preceding. It should be noted that the expression for the intensity $S(i)$ contains three variables that depend on the received light: A0, V and Phi. The other parameters such as Theta(j) do not depend on the received light but have fixed device dependent values, which can be determined by calibration. The expressions for $S(i)$ can be reformulated as linear combinations of auxiliary variables $x1=A0$, $x2=A0*V*\cos(Phi)$ and $x3= A0*V*\sin(Phi)$. Thus $tg(Phi)=x3/x2$, where "tg" is the tangent function. In the 2-n beam combiner the values of Theta(i) are different fro different outputs (e.g. zero, hundred twenty and two hundred forty degrees in an example of a 2-3 combiner). This makes it possible to compute an estimate of the value of Phi from at least three intensity measurements $S(i)$. Processing circuit 228 is configured to compute Phi, or thickness variation or another quantity that has a one to one relation to Phi from intensity measurements obtained simultaneously by detectors 226. Such a computation is known per se. For example, it may involve computing an explicit inverse expression for Phi from $S(i)$, e.g. by solving x2, and x3 from the expressions in terms of linear combinations and computing Phi according to $tg(Phi)=x3/x2$. If n>3 a least square fit, e.g. of x1, x2 and x3 may be used to determine a solution, alternatively an iterative solution of A0, V, Phi from the expression may be used, or a search algorithm may be used to search for a A0, V, Phi combination at which differences between the measures intensities at detectors 226 and the predicted intensities $S(i)$ for this A0, V, Phi combination is minimal. Processing circuit 228 may comprise a programmable computer programmed with a program to perform these calculations.

It may be noted that spurious interfering contributions to the detector signals from reflections other than those at the front and back of film 10 should preferably be minimized. This can be realized by suppressing other reflections and avoiding that potential reflectors are at a distance from other reflectors that is within the maximum thickness measuring range defined by the coherence length, or within the coherence distance.

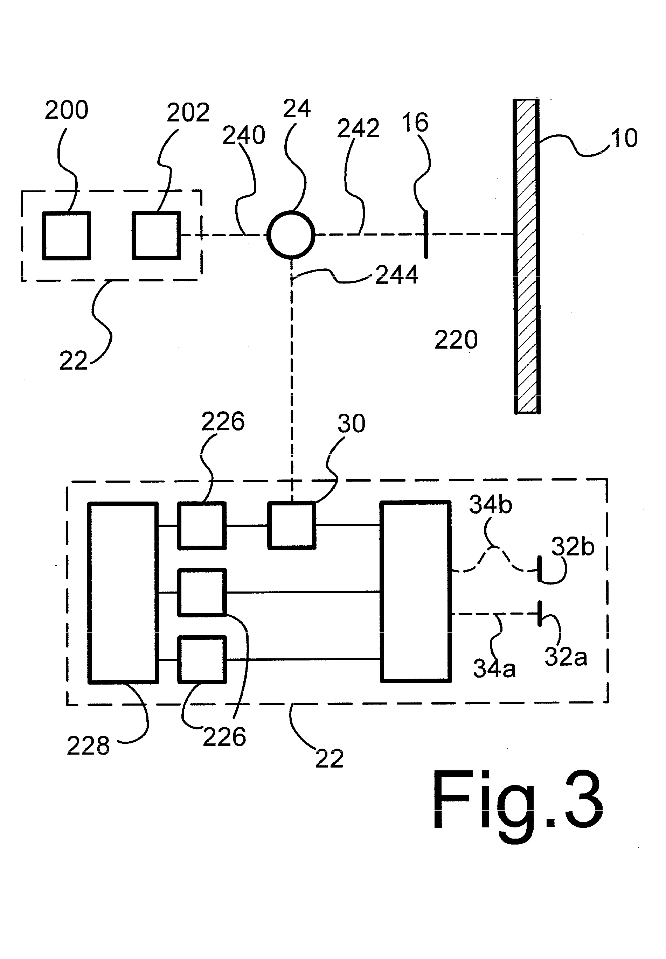

Figure 3 schematically shows an alternative embodiment of the optical thickness measuring device. The difference with the device of figure 2 is that reflected light from the film is fed to 2-n beam combiner 224 from the side of detectors 226 and the optical light transmission paths involve light propagation back and forth through first and second parallel back and forth paths 34a,b located on the opposite side of 2-n beam combiner 224. In this embodiment the optical thickness measuring device comprises a directional coupler 30 (e.g. an optical circulator) and mirrors 32a,b in addition to back and forth paths 34a,b, a 2-n beam combiner 224 (n>2), a plurality of n detectors 226 and a processing circuit 228.

First and second parallel back and forth paths 34a,b are each coupled between a respective input of 2-n beam combiner 224 and a respective mirror 32a,b. An input of directional coupler 30 is coupled to coupler 24. Directional coupler 30 is further coupled between a first output of 2-n beam combiner 224 and a first one of the detectors 226. The first output of 2-n beam combiner 224 serves as input to feed light to back and forth paths 34a,b in reverse through 2-n beam combiner 224. The other detectors 226 are coupled to respective other outputs of 2-n beam combiner 224 without intervening coupler. Optionally, as for the embodiment of figure 2, the various light paths may be realized using optical fibers, an anti-reflective coating may be used at the input-output and a lens may in used in the input output.

In operation, directional coupler 30 feeds reflected light from film 10 to back and forth transmission paths 34a,b through 2-n beam combiner 224. Back and forth transmission paths 34a,b define optical light transmission paths that involve light propagation back and forth through back and forth transmission paths 34a,b. After this light has traveled through back and forth transmission paths 34a,b to mirrors 32a,b, mirrors 32a,b reflect the light back to 2-n beam combiner 224 via back and forth transmission paths 34a,b. 2-n beam combiner 224 combines the light from back and forth transmission paths 34a,b with different phase offsets and feeds the combined light to detectors 226, through directional coupler 30 in the case of the first detector. The relation between the output intensities $S(i)$ at detectors 226 and the parameters A0 and V (in which the reflected light amplitudes I1, 12 are incorporated) and the phase PHI is similar to that for the embodiment of figure 2, keeping in mind that 2-n beam combiner 224 adds an additional predetermined phase difference DPhi when passing the reflected light from directional coupler 30 to the different back and forth transmission paths 34a,b and that the light passes back and forth through back and forth transmission paths 34a,b, so that the optical path length difference DL of the optical light transmission paths is twice the optical path length difference between back and forth transmission paths 34a,b.

It may be noted that in both embodiments the relation between Phi and the thickness T is ambiguous in that adding an integer number of half wavelengths to the thickness does not change the expression for the intensities S(i). For the purpose of monitoring thickness variation during relative transport of the film and the measuring device this is no problem, as thickness value tracking can be used to eliminate effects of the ambiguity.

In an embodiment wherein absolute thickness rather than only thickness variation is monitored. The optical thickness measuring device may be configured to perform a disambiguation measurement. In one embodiment this disambiguation measurement is performed before relative transport of the film and the measuring device starts, or when it has been brought to a standstill, by controlling lighting unit 20 to output light at a series of different wavelength successively, and computing the phase Phi for each of these wavelengths from measurements from detectors 226. In an embodiment wherein bandpass filter 202 comprises an optical fiber with an FBG, lighting unit 20 may comprise a mechanism to stretch the optical fiber for the purpose of controlling the wavelength. Such a mechanism may comprise a piezo electric actuator attached to the fiber, or an electric motor attached to the fiber or a heater configured to heat the fiber for example.

The computed values of Phi for different wavelengths lambda when film 10 is at a standstill relative to the measuring device enable processing circuit 228 to compute the optical thickness T without ambiguity over a wider range than for a single wavelength. For example, processing circuit 228 may be configured to track Phi as a function of wavelength, determine wavelengths at which Phi values differing by a predetermined number of full circles and compute the thickness from these wavelengths.

In an embodiment the path length of at least one of optical light transmission paths 222a,b or 34a,b is tunable to enable measurement of different ranges of physical thickness of the film. In another embodiment, an m-n combiner may be used, instead of 2-n combiner 224, with m>2. In this embodiment splitter 220 may be a one to m beam splitter structure, and m optical light transmission paths of mutually different optical length may be used in parallel between different outputs of the beam splitter and the m-n combiner, each optical light transmission paths (or all but one of the optical light transmission paths) in series with a controllable light switch.

The optical light transmission paths may be used to form pairs of paths, each with a respective difference between the optical lengths of the paths in the pair. The respective optical length differences define different thickness value ranges over which thickness values can be measured. Preferably, these ranges overlap to form a continuous range. But in an alternative embodiment they do not need to overlap, e.g. if it is known that the thickness will be in one of a plurality of separate ranges. To provide for overlap, the optical length differences may form a series of increasing difference size, differing by the coherence distance or less in the case of embodiments like figure 2. In embodiments like figure 3 the difference between successive differences between back and forth the optical lengths differ by the coherence distance or less.

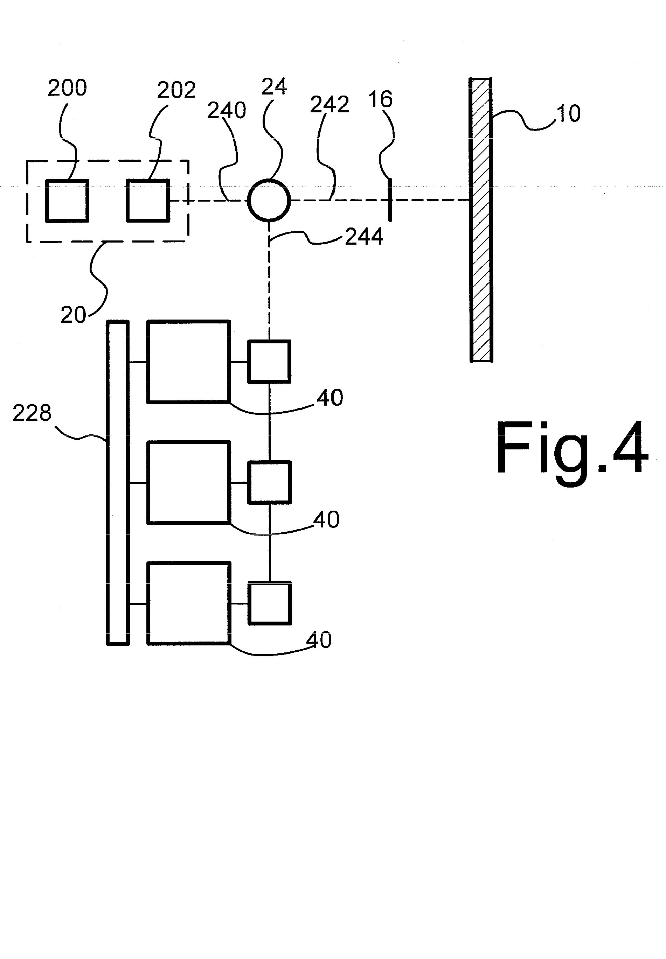

In embodiments with multiple pairs of paths, processing circuit 228 may be configured to use the controllable light switches to select which pair of optical light transmission paths will be used, so as to select the range of thicknesses that can be measured, e.g. by selecting a pair that provides for the largest value of V. Different pairs may share optical transmission paths. In the embodiment of figure 3, pairs of optical paths, splitters and switches may be used between the beam combiner 224 and mirrors 32a,b. More than two mirrors may be used. In this embodiment, the spacing Figure 4 shows a further embodiment wherein a plurality of measuring units 40 is provided in parallel, each with a different optical path length difference between the optical light transmission paths within the measuring units. In this embodiment processing circuit 228 may be configured to select between using intensities from different measuring units according to the thickness of film 10, so as to enable use of a measuring units 40 for which the thickness of film 10 is within its measuring range.

In another embodiment a plurality of measuring units 40 is provided in parallel at different locations on the film. In this embodiment it is also possible to measure thickness at different film locations simultaneously. Alternatively, an optical multiplexer may be provided between different input-outputs and a common measuring unit 22 for those input-outputs. This provides for near-simultaneous measurement of thickness at different film locations. For a non-moving film or target, the deformation (thickness variation) can be measured as a function of time.

## Claims

1. An optical thickness measuring device, the device comprising

> - a wavelength band limited lighting unit, configured to produce light having a coherence length;
> - a device output for transmitting light from the lighting unit to an at least partly transparent layer;
> - a device input for receiving back reflections of the light from the layer;
> - a splitter comprising two splitter outputs and a splitter input coupled to the device input;
> - a 2-n coupler, with n at least three, comprising n coupler outputs and two coupler inputs, configured to mix light from the two coupler inputs into n combinations of light from the two coupler inputs, each combination with a different relative phase offset between the light from the two coupler inputs;
- first and second optical transmission paths of different optical length, between respective ones of the splitter outputs and the coupler inputs, a difference between the optical lengths exceeding the coherence length;
- n detectors coupled to respective ones of the coupler outputs;
- a processing circuit coupled to the n detectors, configured to compute information indicative of a phase difference between the reflections from n intensities of the plurality of combinations of light detected by the n detectors.

2. An optical thickness measuring device according to claim 1, wherein the device input and the device output form a single input-output, the device comprising an optical fiber coupled between the lighting unit and the splitter at a first end and to the input output at a second end.

3. An optical thickness measuring device according to claim 2, comprising an anti-reflection coating on the second end of the optical fiber.

4. An optical thickness measuring device according to claim 2 or 3, wherein the optical fiber is a single mode optical fiber.

5. An optical thickness measuring device according to any one of the preceding claims, wherein the lighting unit comprises an broadband light source and an optical band pass filter coupled between the light source and the device output.

6. An optical thickness measuring device according to claim 5, wherein the lighting unit comprises an optical fiber comprising a fiber Bragg grating, the fiber Bragg grating forming the optical band pass filter.

7. An optical thickness measuring device according to claim 6, comprising means attached to the optical fiber for controllably stretching the fiber Bragg grating.

8. An optical thickness measuring device according to claim 7, wherein the processing circuit is configured to cause said means to vary a degree of stretching of the coupled to the n detectors and to compute said information repeatedly each time with a different degree of stretching.

9. An optical thickness measuring device according to any one of the preceding claims, wherein the first and second optical transmission paths extend from the splitter outputs to the two coupler inputs.

10. An optical thickness measuring device according to any one of claims 1-4, wherein the splitter is formed by the 2-n coupler in reverse, the device comprising a first and second mirror, the first and second optical transmission paths being defined by back and forth optical paths extending between respective ones of the coupler inputs and the first and second mirror.

11. An optical thickness measuring device according to any one of the preceding claims, wherein the processing circuit is configured to compute said information consistent with a combination of A0, V and Phi values that satisfies expressions $S(i) = a(i)*A0*(1+c(i) V*cos (Phi+Theta(i)))$, wherein $S(i)$ are intensities at respective detectors labeled by $i=1,2..n$, A0 is proportional to the optical power of components of the reflections of the light from the layer, V is a visibility factor of the interference signal, Phi is the phase difference, and $a(i)$, $c(i)$ and $Theta(i)$ are predetermined numbers defined by the measuring device.

12. An optical thickness measuring device according to any one of the preceding claims, wherein said a wavelength band limited lighting unit is tunable, the processing circuit being configured to control tuning of a central wavelength of the wavelength band, and to perform a plurality of thickness measurements with the central wavelength tuned to different values.

13. An optical thickness measuring system, comprising a plurality of pairs of first and second optical transmission paths with mutually different differences between the optical lengths of their first and second optical transmission paths, the differences forming a series of differences of increasing size wherein the sizes of successive differences in the series differ by the coherence distance or less.

14. An optical thickness measuring system, comprising the device according to any one of the preceding claims, and a transport system for transporting the at least partially transparent layer in a direction parallel to front and back surfaces of the layer and transverse to a direction of transmission of light from the device output.

15. An optical thickness measuring system according to claim 14, comprising said layer, the layer having a thickness larger than half the coherence length.

16. A method of monitoring the thickness of an at least partially transparent layer, the method comprising

- generating wavelength band limited light, a coherence length that corresponds to the bandwidth of the wavelength band limited light being less than twice the thickness of the layer;
- emitting the wavelength band limited light towards the layer;
- receiving back reflections from the layer;
- transmitting the reflections to an input of an interferometer that comprises first and second light transmission paths and a splitter coupled to the input, the splitter having outputs coupled to the first and second light transmission paths;
- mixing light from the first and second light transmission paths into a plurality of combinations of the reflected light from the first and second light transmission paths, each with a different mutual phase offset between the light from the first and second light transmission paths, an optical path length difference provided by the first and second light transmission paths before the reflections are mixed differing by less than the coherence length from twice the optical thickness of the layer ;
- simultaneously measuring intensity of each of the plurality of combinations of light;
- computing information indicative of a phase difference between the reflections from the intensities of the plurality of combinations of light;
- using said information to monitor the thickness.

17. A method according to claim 16, for monitoring the thickness as a function of position along the layer, the method comprising transporting the layer laterally relative to the position where the light is emitted towards the layer.

18. A method according to claim 16, wherein the wavelength band limited light is generated by band pass filtering light from a broadband light source, using a fiber Bragg grating as a bandpass filter, varying a degree of stretching of the fiber Bragg grating, and computing said information repeatedly each time with a different degree of stretching.

# Fig.1

# Fig.2

200  202  240  24  242  16  10

22

244

220

226  30

34b

32b

32a

34a

228  226  22

# Fig.3

200 202 240 24 242 16 10

228

20

244

40

40

40

# Fig.4

Europäisches
Patentamt

European
Patent Office

Office européen
des brevets

# EUROPEAN SEARCH REPORT

Application Number

EP 15 18 8225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 792 996 A1 (TNO [NL]) 22 October 2014 (2014-10-22) * the whole document * | 1-18 | INV. G01B11/06 G01B9/02 |
| X | MASOUDI A ET AL: "Paper;A distributed optical fibre dynamic strain sensor based on phase-OTDR;A distributed optical fibre dynamic strain sensor based on phase-OTDR", MEASUREMENT SCIENCE AND TECHNOLOGY, IOP, BRISTOL, GB, vol. 24, no. 8, 5 July 2013 (2013-07-05), page 85204, XP020248362, ISSN: 0957-0233, DOI: 10.1088/0957-0233/24/8/085204 * the whole document * | 1-9, 11-18 | |
| Y | US 2012/140239 A1 (LEE CHENG-CHUNG [US] ET AL) 7 June 2012 (2012-06-07) * the whole document * | 1,16 | |
| Y | PRIEST R G: "Analysis of Fiber Interferometer Utilizing 3 x 3 Fiber Coupler", IEEE TRANSACTIONS ON MICROWAVE THEORY AND TECHNIQUES, IEEE SERVICE CENTER, PISCATAWAY, NJ, US, vol. 30, no. 10, 1 October 1982 (1982-10-01), pages 1589-1591, XP011244025, ISSN: 0018-9480 * the whole document * | 1,16 | TECHNICAL FIELDS SEARCHED (IPC) G01B |

The present search report has been drawn up for all claims

| Place of search | Date of completion of the search | Examiner |
|---|---|---|
| Munich | 31 March 2016 | Stanciu, C |

## ANNEX TO THE EUROPEAN SEARCH REPORT
## ON EUROPEAN PATENT APPLICATION NO.

EP 15 18 8225

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2016

| Patent document cited in search report | | Publication date | Patent family member(s) | | Publication date |
|---|---|---|---|---|---|
| EP 2792996 | A1 | 22-10-2014 | EP | 2792996 A1 | 22-10-2014 |
| | | | EP | 2986929 A1 | 24-02-2016 |
| | | | US | 2016076872 A1 | 17-03-2016 |
| | | | WO | 2014171825 A1 | 23-10-2014 |
| US 2012140239 | A1 | 07-06-2012 | TW | 201224427 A | 16-06-2012 |
| | | | US | 2012140239 A1 | 07-06-2012 |

For more details about this annex : see Official Journal of the European Patent Office, No. 12/82